# EUROPEAN PATENT SPECIFICATION

(11) **EP 0 560 557 B1**
(45) Date of publication and mention of the grant of the patent: **01.10.1997**
(21) Application number: 93301739.4
(22) Date of filing: 08.03.1993
(51) Int. Cl.: B60N 3/04

(54) **Structure for a foot pad in an automobile rug**
Struktur einer Fussmatte in einem Kraftfahrzeugteppich
Structure d'un paillasson dans un tapis de voiture

(30) Priority: 13.03.1992 MY 9200406
(43) Date of publication of application: 15.09.1993
(73) Proprietor: FORMOSA SAINT JOSE CORPORATION, Taipei (TW)
(72) Inventor: Yang, Wen-Hwang, Taipei (TW)
(74) Representative: Dallmeyer, Georg, Dipl.-Ing.

(56) References cited:
- EP-A- 0 373 724
- EP-A- 0 379 630
- WO-A-86/06691
- DE-U- 8 707 943
- DE-U- 8 710 778
- DE-U- 8 911 331
- US-A- 4 361 610
- US-A- 4 856 654
- US-A- 5 003 664

## Description

The automobile (or car) has become an indispensable transportation means, and the automobile industry (and satellite industries thereof) have been highly developed in all developed countries. Various models of cars with different features have also been designed and manufactured to meet the market demand. Therefore, all the car manufacturers lose no time to research and develop new cars. However, a perfect car not only has excellent functions and outer appearance, but it also should have a complete set of accessories and inner decorations to show the prominent features of a deluxe car. Therefore, the inner accessories of a car are important.

The rug (or carpet) in a car is to be stepped on by a driver or passengers, and to provide a decorative function for a car. Consequently, the rug has become an indispensable accessory. A car owner usually adds a set of foot pads (i.e., four foot pad pieces with a given pattern and colour, which are on sale as a set) so as to protect the rug in a car. It is well-known that a set of foot pads has a small part which is susceptible to wear-and-tear, the so-called "pedalled part", which is a small part which is usually stepped on by a driver's two feet. When a driver steps on the accelerator, the clutch, or the brake pedal with force, his (or her) shoe heel would first be put on the pedalled part of the foot pad. The pedalling force of the shoe heel is similar to a vertical impact applied to the foot pad, i.e. it is not a parallel rubbing force. After a period of time of such vertical impacts, the pedalled part will be broken with a through hole, and it would become useless - this is particularly true for a female driver who usually wears high heel shoes. As a result, the foot pad has to be replaced, though the particular type of foot pad with the same pattern and colour might not be available. Usually, the supplier of such foot pads would recommend a car owner to replace the whole set of foot pads (i.e. four pieces) and it would cost the car owner more money just because of that small broken part, aside from the inconvenience to the owner. If the broken foot pad is not replaced with a new piece, the whole car looks like an imperfect one, and the rug under the foot pad could subsequently be damaged. In addition, there would be an abnormal or strange pedalling feeling to the driver.

A foot pad arrangement is known from US-A-4 361 610, in which the pedalled part is protected by stiff bristles frictionally engaging with the fibres of the underlying motor vehicle floor carpet.

Another foot pad arrangement is known from DE-U-87 10 778.3, disclosing a separate pedal piece which is disposed in a recess formed in the base plate.

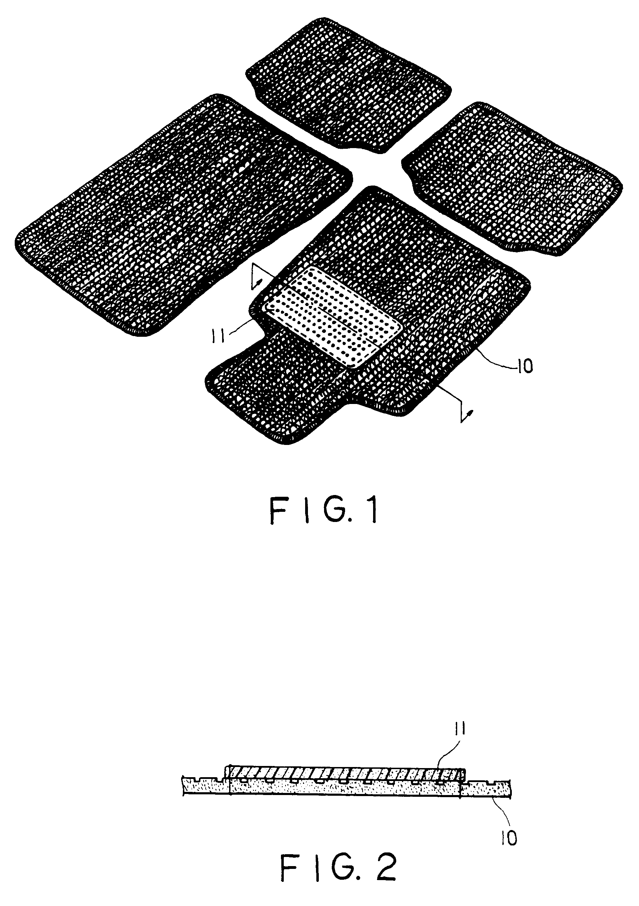

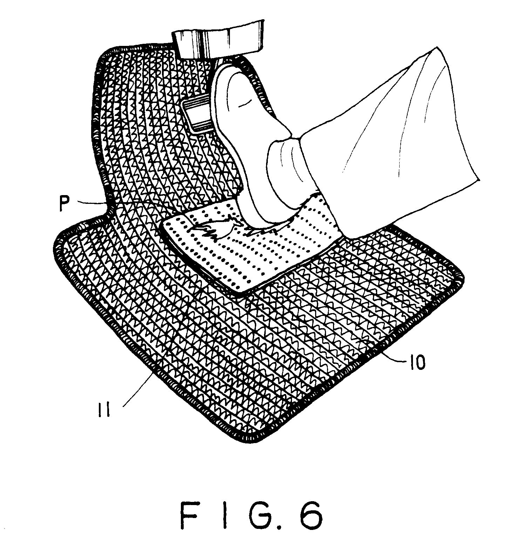

In view of the aforesaid drawbacks of known foot pads, a known improved foot pad, which is shown in Fig. 1, has a pedal piece made of plastics material, the pedal piece being attached to the pedalled part of the foot pad for preventing the pedalled part from impact and tear, at least for a given period of time. However, as soon as the pedal piece is broken, the rug in the car will be damaged (as indicated by P in Fig. 6). In that case, the rug and the whole set of foot pads in a car have to be replaced, at considerable expense because the broken "pedalled part" cannot be replaced. In other words, this foot pad set is unable to solve the problem of the vulnerable foot pad. Moreover, the aforesaid foot pad made of plastics material is harmful to a shoe heel, because both are made of rigid materials, i.e. plastics is not a good material for making a foot pad.

In view of the aforesaid drawbacks of that foot pad, the inventor has developed an improved foot pad arrangement which is to be attached to a rug in a car. According to the present invention, the drawbacks of the conventional foot pad can be eliminated, and such a foot pad can provide a car with a practical function.

The present invention provides a foot pad arrangement for protecting an automobile rug, the arrangement comprising a foot pad, a base plate and a pedal piece, the foot pad being formed at the front with a rectangular hole, the base plate being sewn to the foot pad beneath the hole, the top side of the base plate being provided with several parallel slots for receiving Velcro strips or two-sided adhesive tapes, the underneath side of the base plate being provided with a plurality of slip-resistant beads, the pedal piece being sized to fit in the hole, the top side of the pedal piece being provided with a brush-type elastic pile, the underneath side of the pedal piece being provided with several Velcro strips which correspond in number and position to the Velcro strips in the slots, whereby the pedal piece can be fastened to the base plate by means of said Velcro strips, in such a manner as to resist movement relative thereto, and so that, whenever the pedal piece becomes worn and/or torn, it can be replaced by a new one.

The invention will now be described in greater detail, by way of example, with reference to the drawings, in which:-
Fig. 1 is a perspective view of a set of conventional foot pads for a car;
Fig. 2 is a sectional view of a conventional foot pad;
Fig. 3 is an exploded perspective view of an embodiment of foot pad according to the present invention;
Fig. 4 is a sectional view of the foot pad of Fig. 3;
Fig. 5 is an exploded perspective view of another embodiment of foot pad according to the present invention; and
Fig. 6 is a perspective view showing the wear-and-tear condition of a conventional foot pad in a car.

Referring to the drawings, Figs. 1 and 2 show the structure of a conventional foot pad 10 for a car, this foot pad being intended to be mounted in front of a driver's seat). The foot pad 10 is usually made of a high value material. In order to increase the serviceable life of the foot pad 10, the manufacturer usually mounts a pedal piece 11 made of hard or plastic material above a small area on the foot pad, where the pad is susceptible to wear and tear as a result of the movement of the driver's foot. However, the material of such a pedal piece 11 does not match in colour or feel to the foot pad and the rug in a car. Moreover, after being used for a given period of time, the pedal piece 11 tends to become broken by the heel of a driver's shoe, and the car owner or the manufacturer would not repair or replace the broken pedal piece. In other words, the car owner has to buy a new set (four pieces) of conventional foot pads with additional costs, and this is deemed uneconomical.

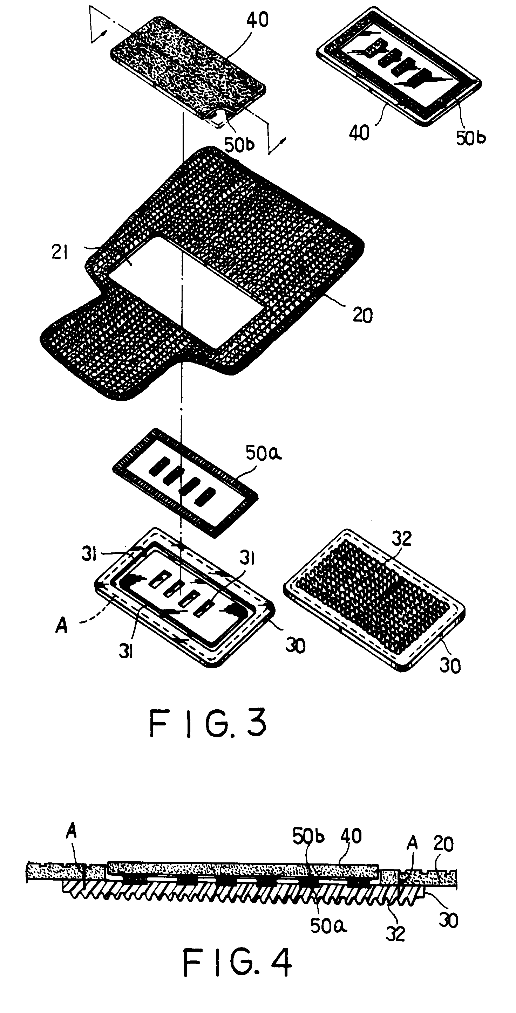

Referring to Figs. 3 and 4, the present invention comprises a foot pad 20, a base plate 30, and a pedal piece 40. The front part of the foot pad 20 has a rectangular hole 21 in the region to be pedalled by a driver's foot. The base plate 30 is slightly larger than the rectangular hole 21. The base plate 30 is fitted in place along the edge of the rectangular hole 21 by means of sewing along a line "A" so as to fix the foot pad 20 to the base plate.

As shown in Fig. 3, the base plate 30 is a substantially flat piece, of which the top side has several parallel slots 31 for receiving a corresponding number of Velcro strips 50a. The strips 50a are fastened to Velcro strips 50b provided on the underneath surface of the pedal piece 40. The Velcro strips have a pile surface or a hook surface. The underneath side of the base plate 30 is provided with a plurality of slip-resistant beads 32, whereby the base plate can be adhered to the car rug under the foot pad 20, so as to prevent the foot pad from slipping on the car rug.

As shown in Fig. 3, the pedal piece 40 is an exact fit within the rectangular hole 21 of the foot pad 20, so that the pedal piece fills the rectangular hole whereby the pedal piece and the foot pad effectively becomes one single piece. The top side of the pedal piece 30 is provided with a brush-type elastic pile surface in the same colour and pattern as those of the foot pad 20. Such a pile surface can minimise the wear and tear to a driver's shoe heel. As mentioned above, the underneath side of the pedal piece 40 is furnished with several Velcro strips 50b corresponding to the Velcro strips 50a in the slots 31 of the base plate 30. After the pedal piece 40 is positioned above the base plate 30, both the pedal piece and the base plate 30 are fastened together by means of the Velcro strips 50a and 50b. In that case, the pedal piece 40 and the foot pad 20 will effectively become one single piece.

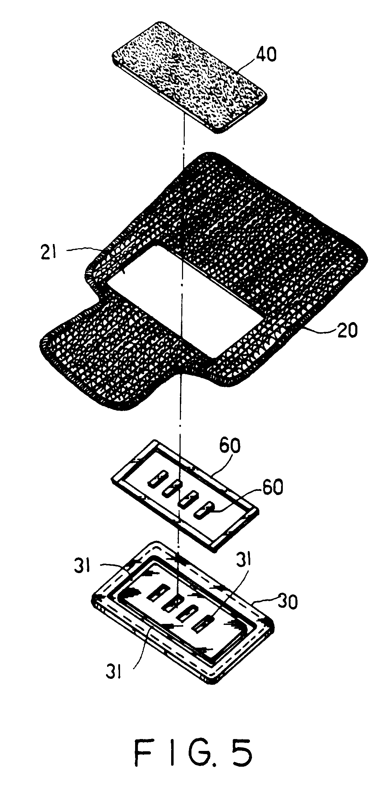

Fig. 5 illustrates another embodiment according to the present invention, in which the slots 31 in the base plate 30 are filled with two-side adhesive tapes 60, whereby the base plate 30 and the pedal piece 40 are stuck together directly, this sticking method providing the same fastening result as that of the Velcro strips.

In brief, since the pedal piece 40 of the present invention is made of a brush-type elastic pile, it does not harm the shoe heel. The pattern and colour of the pedal piece 40 may be varied, i.e. they are not limited to that of the foot pad 20. Whenever the pedal piece 40 becomes worn and/or torn, it can easily be removed from the base plate 20 for replacement with a new one. In other words, the present invention is more convenient to a user in comparison with the conventional foot pad. Moreover, there is a saving of money as there is no need to replace a whole piece or set of the foot pad. It is apparent that the present invention is practical without having the drawbacks of the conventional foot pad, aside from the simple and novel features thereof.

## Claims

1. A foot pad arrangement for protecting an automobile rug, the arrangement comprising a foot pad (20), a base plate (30) and a pedal piece (40), the foot pad being formed at the front with a rectangular hole (21), the base plate being sewn to the foot pad beneath the hole, the top side of the base plate being provided with several parallel slots (31) for receiving Velcro strips (50a) or two-sided adhesive tapes (60), the underneath side of the base plate being provided with a plurality of slip-resistant beads (32), the pedal piece being sized to fit in the hole, the top side of the pedal piece being provided with a brush-type elastic pile, the underneath side of the pedal piece being provided with several Velcro strips (50b) which correspond in number and position to the Velcro strips in the slots, whereby the pedal piece can be fastened to the base plate by means of said Velcro strips, in such a manner as to resist movement relative thereto, and so that, whenever the pedal piece becomes worn and/or torn, it can be replaced by a new one.

## Patentansprüche

1. Fußmattenanordnung zum Schutz eines Automobilteppichs, wobei die Anordnung eine Fußmatte (20), eine Basisplatte (30) und ein Pedalteil (40) aufweist, wobei die Fußmatte im vorderen Bereich mit einer rechteckigen Ausnehmung (21) versehen ist, die Basisplatte unter der Ausnehmung an die Fußmatte genäht ist, die Oberseite der Basisplatte mit mehreren parallelen Schlitzen (31) zur Aufnahme von Klettbandstreifen (50a) oder doppelseitigem Klebeband (60) versehen ist, die Unterseite der Basisplatte mit mehreren ein Rutschen verhindernden Stegen (32) ausgebildet ist, das Pedalteil derart bemessen ist, daß es in die Ausnehmung paßt, die Oberseite des Pedalteils mit einem bürstenartigen elastischen Flor versehen ist, und wobei die Unterseite des Pedalteils mit mehreren Klettbandstreifen (50b) versehen ist, die in Zahl und Position den Klettbandstreifen in den Schlitzen entsprechen, wodurch das Pedalteil an der Basisplatte mittels der Klettbandstreifen derart befestigbar ist, daß es relativ zu dieser gegen Bewegung fixiert ist, und daß, bei Verschleiß und/oder Beschädigung des Pedalteils, dieses durch ein neues ersetzbar ist.

## Revendications

1. Structure de paillasson pour protéger un tapis de voiture, la structure comprenant un paillasson (20), une plaque de base (30) et une pièce de pédale (40), le paillasson étant réalisé avec une ouverture rectangulaire (21) dans sa face, la plaque de base étant cousue au paillasson au-dessous de l'ouverture, le côté supérieur de la plaque de base étant muni de plusieurs fentes parallèles (31) pour recevoir des bandes Velcro (50a) ou des rubans (60) adhésifs sur les deux faces, le côté inférieur de la plaque de base étant muni d'une pluralité de nervures (32) résistantes au glissement, la pièce de pédale étant dimensionnée pour s'ajuster dans l'ouverture, le côté supérieur de la pièce de pédale étant muni de poils élastiques de type brosse, le côté inférieur de la pièce de pédale étant muni de plusieurs bandes Velcro (50b) qui correspondent en nombre et position aux bandes Velcro dans les fentes, grâce à quoi la pièce de pédale peut être fixée à la plaque de base au moyen desdites bandes Velcro, de manière à résister au mouvement relatif en cet endroit , et de sorte que, toutes les fois où la pièce de pédale devient usée et/ou déchirée, elle peut être remplacée par une pièce neuve.
